# EUROPEAN PATENT APPLICATION

(11) **EP 2 811 162 A2**
(43) Date of publication of application: **10.12.2014**
(21) Application number: 13743312.4
(22) Date of filing: 29.01.2013
(51) Int. Cl.: F04B 43/08

(54) **SMART HYBRID ACTUATOR**

(30) Priority: 30.01.2012 KR 20120009130
(71) Applicant: Lee, Jong Hee, Busan 607-817 (KR)
(72) Inventor: Lee, Jong Hee, Busan 607-817 (KR)
(74) Representative: Sielewiesiuk, Jakub
(86) International application number: PCT/KR2013/000720
(87) International publication number: WO 2013/115546

(57) **Abstract**

Disclosed is a smart hybrid actuator including: a body (51) open at one side thereof and having a space portion formed at the inside thereof so as to reciprocate a piston (531) thereinto, a flow path space portion (515) formed in a wall thereof so as to flow hydraulic oil therealong, and a cover portion (512) formed at the other side thereof, into which a rod hole (511) is penetrated; a driving motor (30) for driving a hydraulic pump (1) positioned inside the body (51); the piston (531) extended to the outside from the rod hole (511) of the cover portion (512) in such a manner as to be reciprocated inside the body (51) in the lengthwise direction thereof; and the hydraulic pump (1) provided inside the body (51) and driven by the driving motor (30), wherein the wall of the body (51) has an inner peripheral wall (513), and the flow path space portion (515) is formed in the wall of the body (51). The flow path space portion is formed in the wall without any additional pipes, thereby minimizing space required for installation. Circulation is carried out inside the body, thereby minimizing the influence of expansion or retraction, which depends on the heating of the hydraulic oil or outside temperature, on the strokes of the piston. No hydraulic pipes exist on the outside of the actuator, thereby solving problems related to defunctionalization of the actuator due to water leakage or shock.

## Description

### [Technical Field]

The present invention relates to a smart hybrid actuator, and more particularly, to a smart hybrid actuator configured in simple and smart ways wherein no additional pipe along which hydraulic oil flows is needed, thus reducing production cost and providing easy installation, and further, the space for installation is substantially reduced through the simple and smart configuration thereof, thus improving the utilization in the space for installation thereof.

### [Background Art]

Generally, an actuator, which is operated by using various kinds of power, is structurally different in accordance with the kinds of power used. For example, the actuator is largely classified into an electric actuator, a pneumatic actuator, and a hydraulic actuator in accordance with the kinds of power used.

The electric actuator rotates a motor with electric power through manipulation load of a valve generated by the friction with oil pressure to output a rotary force and a driving force therefrom. The pneumatic actuator makes use of compressed air or compressed gas to output a driving force through a cylinder or a vane motor, and the hydraulic actuator makes use of the physical energy of compressed oil.

A hydraulic pump mounted in the actuator is a part for converting the mechanical energy supplied from the outside into pressure energy of oil for operating a hydraulic system, and the hydraulic pump is largely divided into a fixed delivery type hydraulic pump having a constant volume of fluid pushed and a variable delivery type hydraulic pump having a variable volume of fluid pushed.

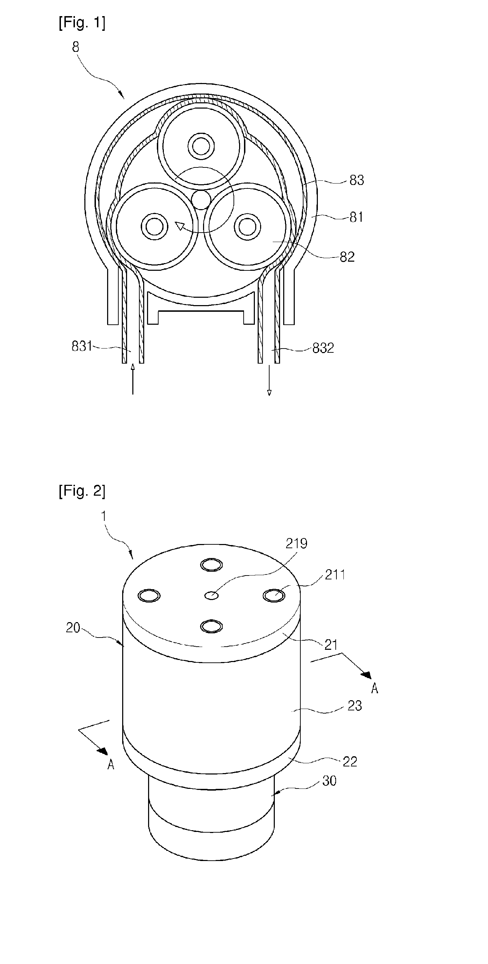

Among them, the fixed delivery type hydraulic pump has been disclosed in Korean Patent Registration No. 10-0509925. As shown in FIG.1, the conventional fixed delivery type hydraulic pump 8 includes a housing 81, transfer rollers 82, a transfer tube 83 and a driving motor (not shown). The housing 81 having the shape of a cylindrical container has a through hole formed at one side thereof so as to penetrate the rotary shaft of the driving motor thereinto. The transfer rollers 82 having the shape of a cylindrical pipe have cylindrical grooves formed thereinto so as to rotatably insert shafts thereinto. In this case, three shafts are erectedly mounted on a circular rotary plate (not shown). The transfer tube 83 is made of a soft rubber tube and located between the inner peripheral surface of the housing 81 and the transfer rollers 82. The rotary shaft of the driving motor is passed through the through hole of the housing 81 to rotate the rotary plate and the three transfer rollers 82.

Under the above-mentioned configuration of the conventional fixed delivery type hydraulic pump 8, if the rotary shaft of the driving motor is forwardly rotated, the three transfer rollers 82 are forwardly rotated around the rotary shaft, and the transfer rollers 82 on the contacted portion between the outer peripheral surfaces of the transfer rollers 82 and the transfer tube 83 compress and retract the transfer tube 83, and the fluid inside the transfer tube 83 located in the section between the neighboring transfer rollers 82 is sequentially and continuously discharged from the introduction side 831 of the transfer tube 83 to the discharge side 832 thereof. Contrarily, if the rotary shaft of the driving motor is reversely rotated, the three transfer rollers 82 are reversely rotated around the rotary shaft, and the fluid inside the transfer tube 83 located in the section between the neighboring transfer rollers 82 is sequentially and continuously discharged from the discharge side 832 to the introduction side 831 thereof.

By the way, the conventional fixed delivery type hydraulic pump 8 has some limitations on increasing pumping capability, that is, on increasing the amount of fluid discharged determining the capacity of the pump. So as to increase the amount of fluid discharged, that is, the diameter of the transfer tube 83 and the number of transfer tubes should be increased.

If the diameter and flow path radius of the transfer tube 83 are extended, however, the radius of the housing 81 is accordingly increased, and if the number of transfer tubes is increased, the width of the housing 81 is accordingly extended, so that the whole volume of the hydraulic pump is bulky. So as to increase the number of transfer tubes, the transfer tubes are laid on each other along the lengthwise direction of the rotary shaft, which causes the housing 81 to be increased in volume along the lengthwise direction of the rotary shaft in proportion to the number of transfer tubes.

Accordingly, if the conventional fixed delivery type hydraulic pump 8 is applied to a compact driving device, there is a limitation on the improvement of the pumping capability thereof, which demands the development for a new hydraulic pump capable of improving the pumping capability through the increase of the amount of fluid discharged, while occupying a substantially small volume in a restricted space. Further, the conventional fixed delivery type hydraulic pump 8 has the introduction side 831 and the discharge side 832 of the transfer tube 83 arranged in the same direction as each other, so that the conventional fixed delivery type hydraulic pump 8 cannot be applied to a configuration wherein the hydraulic pump is inserted into a structure closed in the lengthwise direction thereof like a cylinder in such a manner as to have the introduction direction and the discharge direction of the fluid are arranged in the opposite direction to each other.

On the other hand, the conventional actuator has pipes along which hydraulic oil flows to reciprocate a piston, thus increasing the production cost and making it hard to conduct the pipe installation and maintenance. Furthermore, if the power source of the hydraulic oil is malfunctioned, the whole system does not work, and besides, high precision of control is impossible. Particularly, water leakage or pressure loss may be generated from the pipes exposed to the outside of the actuator.

### [Disclosure]

### [Technical Problem]

Accordingly, the present invention has been made in view of the above-mentioned problems occurring in the prior art, and it is an object of the present invention to provide a smart hybrid actuator that is capable of allowing a flow path space portion to be formed inside a body thereof, along which hydraulic oil for reciprocating a piston disposed inside the body is moved circulatedly, thus reducing the size and volume thereof to effectively utilize the space for installation and thus requiring no additional pipes to remove the inconveniences of the pipe installation and repairing.

### [Technical Solution]

To accomplish the above object, according to the present invention, there is provided a smart hybrid actuator comprising: a body open at one side thereof and having a space portion formed at the inside thereof so as to reciprocate a piston thereinto, a flow path space portion formed in a wall thereof so as to flow hydraulic oil therealong, and a cover portion disposed at the other side thereof, into which a rod hole is penetrated, a driving motor for driving a hydraulic pump positioned inside the body, the piston extended to the outside from the rod hole of the cover portion in such a manner as to be reciprocated inside the body in the lengthwise direction thereof, and the hydraulic pump provided inside the body and driven by the driving motor; wherein the wall of the body has an inner peripheral wall, and the flow path space portion is formed in the wall of the body.

According to the present invention, preferably, the wall of the body includes the inner peripheral wall and an outer peripheral wall, and the flow path space portion is formed between the inner peripheral wall and the outer peripheral wall in such a manner as to be extended in the moving direction of the piston.

According to the present invention, preferably, the hydraulic pump is located under the piston and driven in such a manner as to be connected to a driving shaft of the driving motor.

### [Advantageous Effects]

According to the present invention, the smart hybrid actuator has the body having the flow path space portion formed at the inside thereof, along which the hydraulic oil flows, so that no additional pipes are needed, thus reducing the space occupied for installation, and further, circulation is carried out inside the body, thus minimizing the influence of expansion or retraction, which depends on the heating of the hydraulic oil or external temperature, on the strokes of the piston. Additionally, no hydraulic pipes exist on the outside of the actuator, thus solving the problem that the actuator is defunctionalized due to water leakage or shock.

### [Description of Drawings]

FIG.1 is a sectional view showing a conventional fixed delivery type hydraulic pump.
FIG.2 is a perspective view showing a fixed delivery type hydraulic pump applied to a smart hybrid actuator according to the present invention.
FIG.3 is an exploded perspective view showing the fixed delivery type hydraulic pump applied to the smart hybrid actuator according to the present invention.
FIG.4 is a sectional view showing the line A-A of FIG.2.
FIGS.5a to 5e are top views showing the operations of various variations of the fixed delivery hydraulic pump applied to the smart hybrid actuator according to the present invention.
FIGS.6 and 7 are sectional views showing the smart hybrid actuator having the fixed delivery type hydraulic pump according to the present invention.

### [Best Mode for Invention]

Hereinafter, an explanation on a smart hybrid actuator according to the present invention will be in detail given with reference to the attached drawings.

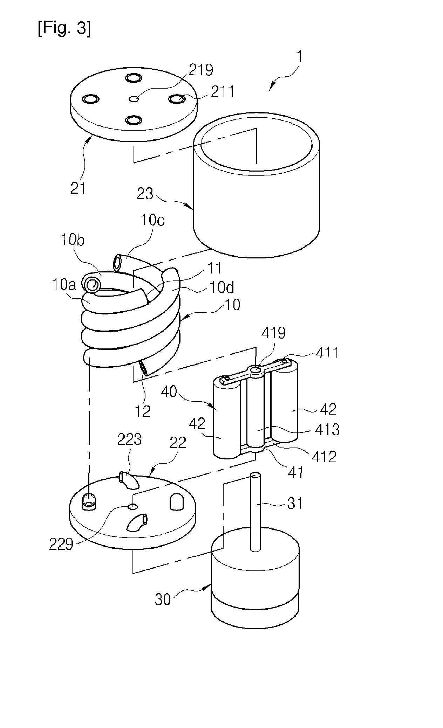

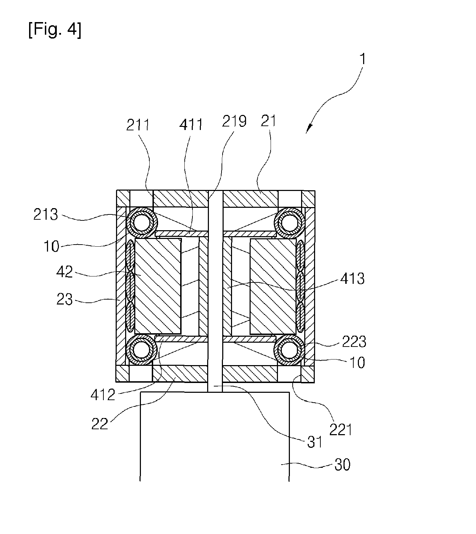

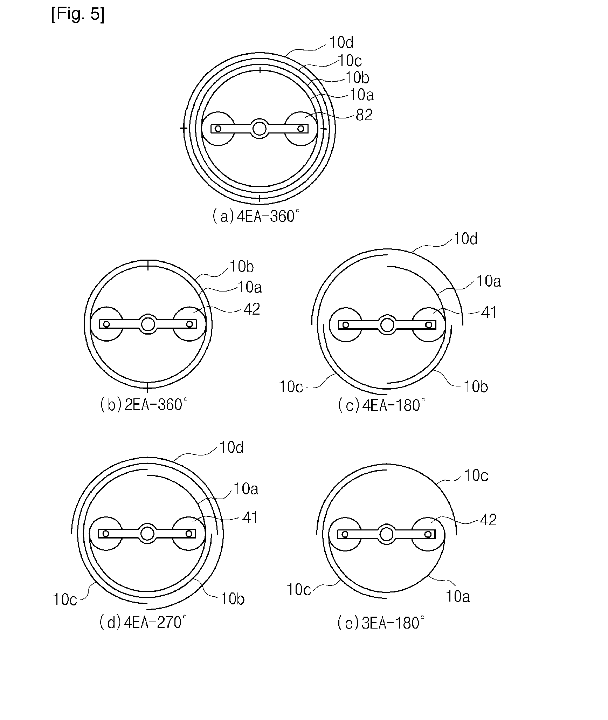

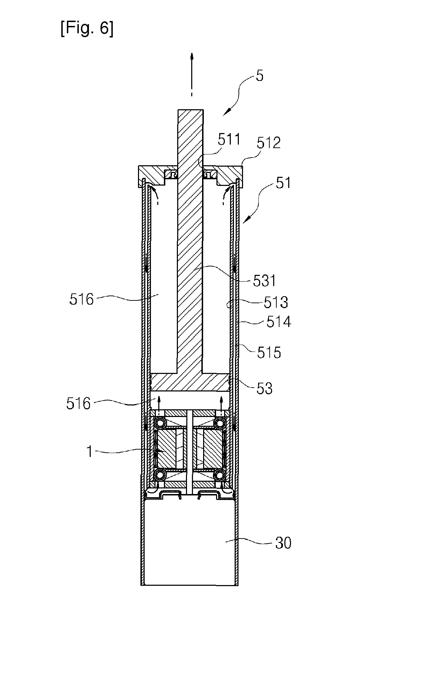

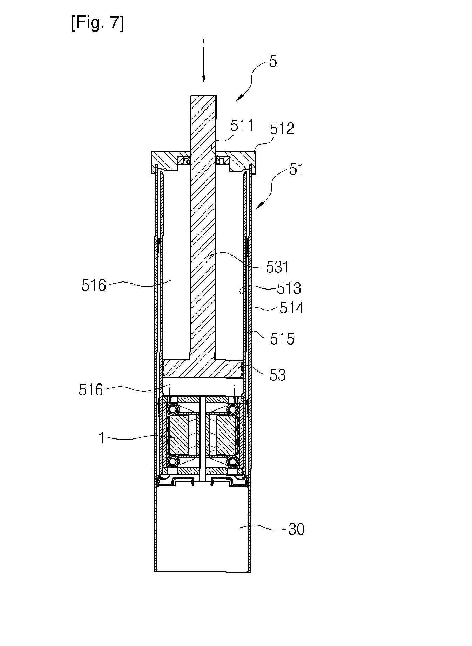

FIG.2 is a perspective view showing a fixed delivery type hydraulic pump applied to a smart hybrid actuator according to the present invention, FIG.3 is an exploded perspective view showing the fixed delivery type hydraulic pump applied to the smart hybrid actuator according to the present invention, FIG.4 is a sectional view showing the line A-A of FIG.2, FIGS.5a to 5e are top views showing the operations of various variations of the fixed delivery hydraulic pump applied to the smart hybrid actuator according to the present invention, and FIGS.6 and 7 are sectional views showing the smart hybrid actuator having the fixed delivery type hydraulic pump according to the present invention.

Hereinafter, the vertical direction in FIG.3 is referred to as "upper and lower direction", "lengthwise direction", or "axial direction".

According to the present invention, as shown in FIGS.2 to 4, a fixed delivery type hydraulic pump 1 applied to a smart hybrid actuator according to the present invention includes a tube 10, a housing 20 and a pressurizer 40. A reference numeral 30 in FIGS.2 to 4 indicates a driving motor for driving the fixed delivery type hydraulic pump 1.

The tube 10 is made of silicone rubber or a flexible soft material and hollow at the interior thereof. One or more tubes are provided, and desirably, even numbered tubes like two, four, six or eight tubes are provided. This allows an amount of fluid discharged through the pressurization of the pressurizer 40 as will be discussed later to become regular and further allows the load applied to the pressurizer 40 to be uniformly distributed. Four tubes 10 are provided in FIG.3. According to the present invention, one or more tubes 10 may be provided, but for the convenience of the description, the configuration wherein four tubes 10 are provided will be explained.

A first tube 10a is open at both ends 11 and 12 thereof in the opposite directions to each other and extended spirally from one end 11 toward the other end 12 in the lengthwise direction thereof, so that a fluid flows along both ends 11 and 12 thereof in the lengthwise direction thereof. A second tube 10b is extended spirally like the first tube 10a and spaced apart from one end 11 of the first tube 10a with the distance of 90° in the circumferential direction formed by the spiral radius of the first tube 10a. As a result, one end 11 of the first tube 10a and one end of the second tube 10b are located with the distance of 90° on the same circle as each other. A third tube 10c is extended spirally like the first tube 10a and located with the distance of 90° with respect to the second tube 10b. A fourth tube 10d is extended spirally like the first tube 10a and located with the distance of 90° with respect to the third tube 10c. One ends of the first to fourth tubes 10a to 10d are located with the distance of 90° in the circumferential directions thereof.

The first to fourth tubes 10a to 10d have the same shapes as each other, while being arranged at one ends thereof with the distance of 90° in the circumferential directions thereof.

The housing 20 is located on the outside of the spiral radius formed by the tubes 10a to 10d and surrounds the tubes 10a to 10d in such a manner as to be brought into contact with the outer peripheral surfaces of the tubes 10a to 10d. According to the present invention, the housing 20 is provided to surround all of the upper, lower and side portions of the tubes 10a to 10d. The housing 20 serves to radially pressurize the tubes 10a to 10d at the inside or outside thereof, together with the pressurizer 40, thus making the tubes 10a to 10d retracted to cause the flow paths of the tubes 10a to 10d to be closed. As a result, the housing 20 serves to pressurize the tubes 10a to 10d on the opposite side to the pressurizer 40 with respect to the tubes 10a to 10d, at the time when the tubes 10a to 10d are pressurized by the pressurizer 40. Furthermore, the housing 20 serves to fixedly support both ends 11 and 12 of each tube and at the same time serves as a path through which the fluid discharged from both ends 11 and 12 of each tube is gently discharged to the outside of the tubes 10a to 10d.

The housing 20 includes a first cap member 21, a second cap member 22 and a side peripheral wall member 23.

The first cap member 21 is provided at one end portion of the tubes 10a to 10d. The first cap member 21 having the shape of a circular plate has first through holes 211 formed in upward and downward directions thereof with the distance of 90° on four locations thereon. The first through holes 211 are coupled to one ends 11 of the tubes 10a to 10d, thus forming flow paths along which the fluid flows. Further, first coupling portions 213 are formed on the underside (toward the tubes 10a to 10d) of the first cap member 21 in such a manner as to be protrudedly extended downwardly from the first through holes 211. In more detail, the first coupling portions 213 are formed on the positions corresponding to one ends 11 of the tubes 10a to 10d and thus coupled to one ends 11 of the tubes 10a to 10d in such a manner as to be extended spirally like one ends 11 of the spiral tubes 10a to 10d. Further, the first cap member 21 has a first center hole 219 formed at the center thereof so as to rotatably support a driving shaft 31 of a driving motor 30 as will be discussed later. An adhesive is applied to the inner peripheral surfaces of the first coupling portions 213 or to the outer peripheral surfaces of one ends 11 of the tubes 10a to 10d, and as shown in FIG.4, one ends 11 of the tubes 10a to 10d are inserted into the first coupling portions 213 so that the tubes 10a to 10d can be coupled to the first cap member 21. To the contrary, the adhesive is applied to the outer peripheral surfaces of the first coupling portions 213 or to the inner peripheral surfaces of one ends 11 of the tubes 10a to 10d, and the first coupling portions 213 are inserted into one ends 11 of the tubes 10a to 10d so that the tubes 10a to 10d can be coupled to the first cap member 21.

The second cap member 22 is spaced apart from the first cap member 21 in the upward and downward directions thereof by a given distance and surrounds the other side of the tubes 10a to 10d. The second cap member 22 having the shape of a circular plate has second through holes 221 formed in upward and downward directions thereof with the distance of 90° on four locations thereon. The second through holes 221 are coupled to the other ends 12 of the tubes 10a to 10d, thus forming flow paths along which the fluid flows. Further, second coupling portions 223 are formed on the top of the second cap member 22 in such a manner as to be protrudedly spirally extended upwardly from the second through holes 221. In more detail, the second coupling portions 223 are formed on the positions corresponding to the other ends 12 of the tubes 10a to 10d and thus coupled to the other ends 12 of the tubes 10a to 10d in such a manner as to be extended spirally like the other ends 12 of the spiral tubes 10a to 10d. Further, the second cap member 22 has a second center hole 229 formed at the center thereof so as to rotatably support the driving shaft 31 of the driving motor 30. An adhesive is applied to the inner peripheral surfaces of the second coupling portions 223 or to the outer peripheral surfaces of the other ends 12 of the tubes 10a to 10d, and as shown in FIG.4, the other ends 12 of the tubes 10a to 10d are inserted into the second coupling portions 223 so that the tubes 10a to 10d can be coupled to the second cap member 22. To the contrary, the adhesive is applied to the outer peripheral surfaces of the second coupling portions 223 or to the inner peripheral surfaces of the other ends 12 of the tubes 10a to 10d, and the second coupling portions 223 are inserted into the other ends 11 of the tubes 10a to 10d so that the tubes 10a to 10d can be coupled to the second cap member 22.

The first coupling portions 213 and the second coupling portions 223 are made of silicone rubber or a flexible soft material like the tubes 10 to 10d, and further, they may be made of a metal material.

The side peripheral wall member 23 is located between the first cap member 21 and the second cap member 22 in such a manner as to be brought into contact with the outer peripheral surfaces of the tubes 10a to 10d. The side peripheral wall member 23 is open at both sides thereof and has the shape of a hollow cylinder whose inner peripheral surface is brought into contact with the outer peripheral surfaces of the tubes 10a to 10d. The tubes 10a to 10d and the pressurizer 40 are disposed inside the side peripheral wall member 23 in such a manner as to surround the outer peripheral surfaces of the tubes 10a to 10d. The top and underside end peripheries of the side peripheral wall member 23 are coupled to the first cap member 21 and the second cap member 22. The side peripheral wall member 23 is separately made and thus coupled to the first cap member 21 and the second cap member 22, and otherwise, the side peripheral wall member 23 is formed unitarily with any one of the first cap member 21 and the second cap member 22. The side peripheral wall member 23 pressurizes and contactedly supports the tubes 10a to 10d at the inside and outside thereof, together with the pressurizer 40, which may be a separate member formed between the first cap member 21 and the second cap member 22, and in some cases, the side peripheral wall member 23 may be an inner peripheral wall of a cylinder into which the hydraulic pump 1 is installed. According to the present invention, the above-mentioned structure of the side peripheral wall member 23 is just one example, and therefore, of course, it is not limited thereto.

Any one or both of the first cap member 21 and the second cap member 22 may be coupledly inserted into both side portions of the side peripheral wall member 23 in the upward and downward direction thereof.

The driving motor 30, which is a power source for rotating the pressurizer 40, has the driving shaft 31 disposed on one side thereof. The driving shaft 31 of the driving motor 30 is inserted into the housing 20 and rotatably supported against the first center hole 219 and the second center hole 229. The driving shaft 31 may be rotatably supported only against the second center hole 229. The driving shaft 31 of the driving motor 30 is disposed in a direction parallel to the axial direction of the spiral cylinder formed by the tubes 10a to 10d. The driving shaft 31 of the driving motor 30 is passed sequentially through the second center hole 229 of the second cap member 22, a rotary body 41 of the pressurizer 40 as will be discussed later, and the first center hole 219 of the first cap member 21. The driving shaft 31 may be not extended to the first center hole 219. In this case, the first cap member 21 does not have the first center hole 219.

On the other hand, the driving motor 30 has a separate decelerator (not shown). A bearing is mounted into the second center hole 229 so that the driving shaft 31 can be rotatably supported thereagainst.

The pressurizer 40 is disposed at the inside of the spiral radius range formed by the tubes 10a to 10d and pressurizes the tubes 10a to 10d at the inside of the tubes 10a to 10d, while being connected to the driving shaft 31 of the driving motor 30 in such a manner as to be rotatable around the driving shaft 31. The pressurizer 40 has a given length in a direction parallel to the lengthwise direction of the driving shaft 31, that is, in the upward and downward direction thereof and pressurizes the inner peripheral surfaces of the tubes 10a to 10d. Accordingly, portions of the tubes 10 to 10d located between the pressurizer 40 and the side peripheral wall member 23 are retractedly pressurized, and other portions thereof not located between the pressurizer 40 and the side peripheral wall member 23 remain without any retraction. As a result, the fluid flows along the portions of the tubes 10a to 10d where no retraction occurs, whereas the flow of the fluid stops along the retracted portions of the tubes 10a to 10d. Under the above configuration, if the pressurizer 40 is rotated by means of the driving motor 30, the retracted portions of the tubes 10a to 10d are moved in the circumferential direction thereof to spirally move the fluid within the tubes 10a to 10d, so that the fluid is discharged selectively to one ends 11 or the other ends 12 of the tubes 10a to 10d in accordance with the rotational direction of the driving motor 30.

Thus, the tubes 10a to 10d along which the fluid is moved through the pressurization of the pressurizer 40 are spirally located in the lengthwise direction of the pressurizer 40, and even if the number of tubes is increased, an amount of fluid discharged is increased in the defined volume of the tubes, thus substantially improving the pumping capability. Accordingly, the diameters, lengths and number of the tubes are appropriately adjusted to easily control the amount of fluid discharged from the tubes.

The pressurizer 40 includes the rotary body 41 and pressurizing rollers 42.

The rotary body 41 has a first support member 411, a second support member 412 and a post member 413. The first support member 411 and the second support member 412 are spaced apart from each other in the upward and downward direction thereof in such a manner as to be located between the first cap member 21 and the second cap member 22. The first support member 411 is located on the underside of the first cap member 21, and the second support member 412 is located on the top of the second cap member 22 in such a manner as to be spaced apart from the first support member 411 in the lengthwise direction of the driving shaft 31.

The post member 413 is extended in the upward and downward directions thereof in such a manner as to be connected at one side thereof to the first support member 411 and connected at the other side thereof to the second support member 412. The first support member 411 and the second support member 412 are fixedly connected to the post member 413. The driving shaft 31 of the driving motor 30 is insertedly fixed into the post member 413, and as the driving shaft 31 is rotated, the post member 413 is rotated unitarily with the driving shaft 31. The driving shaft 31 is inserted into the post member 413, and then, pins are inserted into the sides of the post member 413, so that the post member 413 and the driving shaft 31 can be rotated unitarily with each other. Otherwise, the post member 413 has a polygonal hole formed thereon, into which the polygonal-shaped driving shaft 31 is inserted, so that the post member 413 and the driving shaft 31 can be rotated unitarily with each other. Further, the post member 413 has a female spline formed on the inner peripheral surface thereof and the driving shaft 31 has a male spline formed on the outer peripheral surface thereof, so that the post member 413 and the driving shaft 31 can be rotated unitarily with each other.

The first support member 411 and the second support member 412 are fixedly connected to the post member 413 in such a manner as to be extended in the radial directions thereof.

The pressurizing rollers 42 are disposed on both sides of the driving shaft 31 around the driving shaft 31 with the distance of 180°. Each pressurizing roller 42 is rotatably coupled at both ends thereof to the first support member 411 and the second support member 412 in such a manner as to be located between the first support member 411 and the second support member 412. First, through holes are formed on the first support member 411 and the second support member 412 in the upward and downward directions thereof, and next, one side both ends of the pressurizing rollers 42 are inserted into the holes on the first support member 411 and the other side both ends thereof are inserted into the holes on the second support member 412.

The pressurizing rollers 42 have given lengths in the axial direction of the spiral radius formed by the tubes 10a to 10d and serve to pressurize one or more tubes in such a manner as to be brought into contact with the inner peripheral surfaces of the tubes 10a to 10d within the range from one ends 11 of the tubes 10a to 10d to the other ends 12 thereof.

If the first coupling portions 213 and the second coupling portions 223 are made of silicone rubber or a flexible soft material like the tubes 10 to 10d, the pressurizing rollers 42 have the axial lengths from one ends 11 of the tubes 10a to 10d to the other ends 12 thereof, and contrarily, if the first coupling portions 213 and the second coupling portions 223 are made of a metal material, as shown in FIG.4, the pressurizing rollers 42 have the lengths by which the first coupling portions 213 and the second coupling portions 223 are not pressurized.

The pressurizing rollers 42 have the shape of a cylinder and come into contact with the tubes 10a to 10d at the inside of the spiral radius formed by the tubes 10a to 10d. In this case, the flow paths in the tubes 10a to 10d are closed through the contact between the pressurizing rollers 42 and the tubes 10a to 10d. As the rotary body 41 is rotated, the contacted portions between the pressurizing rollers 42 and the tubes 10a to 10d are moved to allow the fluid within the tubes 10a to 10d to be squeezed, so that the fluid is moved upwardly or downwardly along the flow paths of the spiral tubes 10a to 10d.

According to various variations of the present invention, on the other hand, the pressurizer 40 has the pressurizing rollers 42 disposed radially around the driving shaft 31, and for example, two, three or four pressurizing rollers 42 are disposed radially around the driving shaft 31. Even if not shown, further, four or more pressurizing rollers 42 may be disposed radially around the driving shaft 31. In this case, the four pressurizing rollers 42 are disposed in a circumferential direction around the driving shaft 31 with the distance of 90°.

Then, an explanation on the structures of the tubes according to the present invention will be in detail given.

As mentioned above, one or more tubes are provided, and the tubes 10a to 10d are spirally formed in such a manner as to be laid on each other in the lengthwise direction of the pressurizer 40 (in the upward and downward directions in FIG.3). As the pressurizer 40 is rotated forwardly or reversely, accordingly, the fluid within the tubes 10a to 10d is moved upwardly or downwardly. One ends 11 of the tubes 10a to 10d are located concentrically on the same plane as each other, and also, the other ends thereof are located concentrically on the same plane as each other.

FIGS.5a to 5e are top views showing the operations of various variations of the fixed delivery hydraulic pump applied to the smart hybrid actuator according to the present invention, wherein the tubes are laid on each other with the same diameters as each other, but for the convenience of the description, they are shown with different diameters from each other.

FIG.5a shows the structure of the tubes according to the present invention, wherein four tubes 10a to 10d are arranged to have one ends and the other ends located with the phase difference of 360°. In this case, the pressuring rollers 42 pressurize the four tubes 10a to 10d at the same time over the whole section thereof, so that load is distributedly applied uniformly to the pressuring rollers 42. If one ends and the other ends of the tubes 10a to 10d have the phase difference of 360°, they are spaced apart from each other in the axial directions thereof but they correspond to each other in the circumferential directions thereof, so that the lines indicated radially denote the locations of one ends and the other ends of the tubes 10a to 10d. The end portions of the four tubes 10a to 10d are spaced apart from each other with the distance of 90° in the circumferential directions thereof.

FIG.5b shows the structure wherein two tubes 10a and 10b are arranged to have one ends and the other ends located with the phase difference of 360°. In this case, the pressuring rollers 42 pressurize the two tubes 10a and 10b at the same time over the whole section thereof, so that load is distributedly applied uniformly to the pressuring rollers 42. If one ends and the other ends of the two tubes 10a and 10b have the phase difference of 360°, they are spaced apart from each other in the axial directions thereof but they correspond to each other in the circumferential directions thereof, so that the lines indicated radially denote the locations of one ends and the other ends of the tubes 10a and 10b. The end portions of the two tubes 10a and 10b are spaced apart from each other with the distance of 180° in the circumferential directions thereof. In this case, if a plurality of pressurizing rollers 42 is equally spaced apart from each other in the circumferential directions thereof, no eccentric load is applied to the pressurizer 40.

As shown in FIGS.5a and 5b, a plurality of pressurizing rollers 42 is equally spaced apart from each other in the circumferential directions thereof, no eccentric load is applied to the pressurizer 40. Further, if two or more pressurizing rollers 42 are equally spaced apart from each other in the circumferential directions thereof, one pressurizing roller 42 starts to pressurize the tubes before the other pressurizing roller 42 stops the pressurization, thus serving as a pump.

FIG.5c shows the structure wherein the four tubes 10a to 10d are arranged to have one ends and the other ends located with the phase difference of 180°, and FIG.5d shows the structure wherein the four tubes 10a to 10d are arranged to have one ends and the other ends located with the phase difference of 270°. In these cases, the pressuring rollers 42 pressurize the two or three tubes at the same time over the whole section thereof, and accordingly, if a plurality of pressurizing rollers 42 is equally spaced apart from each other in the circumferential directions thereof, no eccentric load is applied to the pressurizer 40.

Further, if two or more pressurizing rollers 42 are equally spaced apart from each other in the circumferential directions thereof, one pressurizing roller 42 starts to pressurize the tubes before the other pressurizing roller 42 stops the pressurization, thus serving as a pump.

On the other hand, FIG.5e shows the structure wherein the three tubes 10a to 10c are arranged to have one ends and the other ends located with the phase difference of 180°, and in this case, the pressurizing rollers 42 pressurize the two tubes at the same time over a portion of the whole section thereof, while pressurizing only one tube over the other portions thereof. Accordingly, load is not applied uniformly to the pressuring rollers 42, and thus, eccentric load is applied to the pressurizer 40. Even in this case, however, if two or more pressurizing rollers 42 are equally spaced apart from each other in the circumferential directions thereof, one pressurizing roller 42 starts to pressurize the tubes before the other pressurizing roller 42 stops the pressurization, thus serving as a pump.

Even if not shown, four tubes may be arranged to have one ends and the other ends located with the phase difference of 90°, and in this case, one tube is pressurized by the pressurizing rollers 42 at the same time.

In conclusion, the number of tubes 10, the phase differences of the tubes 10, the diameters and lengths of the tubes 10 are adjusted to allow the amount of fluid discharged from the hydraulic pump 1 to be increased, thus adjusting the pumping capability, and further, the adjustment factors of the tubes 10, as mentioned above, do not increase the volume of the hydraulic pump 1, thus allowing the hydraulic pump 1 to be embedded in a compact actuator. Further, the fluid introduction direction and the fluid discharge direction of the hydraulic pump 1 are arranged in the opposite directions to each other, so that the hydraulic pump 1 can be appropriately installed into a cylinder extended with a relatively long length.

FIGS.6 and 7 are sectional views showing the smart hybrid actuator having the fixed delivery type hydraulic pump according to the present invention. The smart hybrid actuator 5 includes a body 51, a piston 531, the hydraulic pump 1, and the motor 30 driving the hydraulic pump 1.

The body 51 has a space portion formed at the inside thereof, into which the piston 531 as will be discussed later is reciprocated, and further has a flow path space portion 515 formed in the wall thereof, along which the fluid flows. The body 51 has the shape of a cylinder and includes an inner peripheral wall 513 serving as the side peripheral wall member 23 of the hydraulic pump 1 and an outer peripheral wall 514 formed on the outside of the inner peripheral wall 513. As shown in FIGS.6 and 7, the flow path space portion 515 is formed between the inner peripheral wall 513 and the outer peripheral wall 514. The flow path space portion 515 is extended in the moving direction of the piston 531.

The body 51 is open at one side thereof and has a cover portion 512 formed at the other side thereof, into which a rod hole 511 is penetrated. Further, the piston 531 is extended to the outside from the rod hole 511 of the cover portion 512 in such a manner as to be reciprocated inside the body 51 in the lengthwise direction thereof. The hydraulic pump 1 is disposed inside the body 51 in such a manner as to allow the fluid to flow within the body 51 by means of the rotation of the driving motor 30, thus reciprocating the piston 531. In this case, the hydraulic pump 1 is located under the piston 531.

Referring briefly to the operation of the smart hybrid actuator 5 having the above-mentioned configuration, as shown in FIG.6, if the driving motor 30 is rotated to operate the hydraulic pump 1, the fluid flows along the flow path space portion 515 in the direction of an arrow in accordance with the rotational direction of the driving motor 30 and moves downwardly from the hydraulic pump 1. After that, the fluid is discharged upwardly from the hydraulic pump 1 by means of the pumping of the hydraulic pump 1 and moves the piston 531 upwardly. Contrarily, as shown in FIG.7, if the driving motor 30 is rotated in the opposite direction to the above-mentioned direction, the fluid between the piston 531 and the hydraulic pump 1 is pumped downwardly from the hydraulic pump 1 and flows along the flow path space portion 515 in the direction of an arrow, thus moving the piston 531 downwardly.

According to the present invention, the fixed delivery type hydraulic pump 1 has the discharge direction and the introduction direction located in the opposite direction to each other in the axial direction thereof, and in the same manner as above, it has the discharge position and the introduction position placed in the opposite direction to each other in the axial direction thereof. Accordingly, the moving direction and the fluid discharge and introduction directions of the fixed delivery type hydraulic pump 1 are the same as those in the smart hybrid actuator 5 as shown in FIGS.6 and 7, so that the fixed delivery type hydraulic pump 1 can be operatively mounted inside the body 51 of the smart hybrid actuator 5.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

### [Industrial Applicability]

According to the present invention, the body of the smart hybrid actuator has the flow path space portion formed at the inside thereof, along which the fluid flows, so that no additional pipes are needed, thus reducing the space occupied for installation.

## Claims

1. A smart hybrid actuator comprising:
a body 51 open at one side thereof and having a space portion formed at the inside thereof so as to reciprocate a piston 531 thereinto, a flow path space portion 515 formed in a wall thereof so as to flow hydraulic oil therealong, and a cover portion 512 formed at the other side thereof, into which a rod hole 511 is penetrated,
a driving motor 30 for driving a hydraulic pump 1 positioned inside the body 51,
the piston 531 extended to the outside from the rod hole 511 of the cover portion 512 in such a manner as to be reciprocated inside the body 51 in the lengthwise direction thereof, and
the hydraulic pump 1 provided inside the body 51 and driven by the driving motor 30;
wherein the wall of the body 51 has an inner peripheral wall 513, and the flow path space portion 515 is formed in the wall of the body 51.

2. The smart hybrid actuator according to claim 1, wherein the wall of the body 51 comprises the inner peripheral wall 513 and an outer peripheral wall 514, and the flow path space portion 515 is formed between the inner peripheral wall 513 and the outer peripheral wall 514 in such a manner as to be extended in the moving direction of the piston 531.

3. The smart hybrid actuator according to claim 1, wherein the hydraulic pump 1 is located under the piston 531 and driven in such a manner as to be connected to a driving shaft 31 of the driving motor 30.
